# EUROPÄISCHE PATENTSCHRIFT

(11) **EP 0 758 838 B1**
(45) Veröffentlichungstag und Bekanntmachung des Hinweises auf die Patenterteilung: **26.04.2000**
(21) Anmeldenummer: 96112957.4
(22) Anmeldetag: 12.08.1996
(51) Int. Cl.: H05B 37/04, H05B 41/392, H05B 41/42, H05B 41/26, H05B 41/14, H05B 7/00, H05B 41/39, G05D 25/02

(54) **Notleuchte mit konventionellem Vorschaltgerät**
Emergency lamp with conventional ballast
Luminaire de secours avec ballast conventionnel

(30) Priorität: 12.08.1995 DE 19529750
(43) Veröffentlichungstag der Anmeldung: 19.02.1997
(73) Patentinhaber: CEAG Sicherheitstechnik GmbH, 59494 Soest (DE)
(72) Erfinder: Prasuhn, Jürgen, Dipl.-Ing., 59494 Soest (DE)
(74) Vertreter: Grünecker, Kinkeldey, Stockmair & Schwanhäusser Anwaltssozietät

(56) Entgegenhaltungen:
- EP-A- 0 563 804
- DE-A- 3 518 063
- US-A- 4 172 981
- US-A- 5 004 953

## Beschreibung

Die Erfindung bezieht sich auf eine Notleuchte mit wenigstens einem konventionellen Vorschaltgerät und wenigstens einer Leuchtstofflampe.

Leuchten mit konventionellen Vorschaltgeräten erfordern eine Wechselspannung als Versorgungsspannung. Wenn solche Leuchten in Notlichtsystemen mit Gruppen- oder Zentralbatterieversorgung eingesetzt werden sollen, müssen zentrale Wechselrichter angeordnet werden. Soweit Leuchten mit konventionellen Vorschaltgeräten neben Leuchten mit elektronischen Vorschaltgeräten oder elektronischen Transformatoren eingesetzt werden, ist eine zusätzliche Verdrahtung für den Anschluß der Leuchten mit konventionellen Vorschaltgeräten an einen Wechselrichter erforderlich.

Der Mischbetrieb unterschiedlicher Leuchtenarten mit zentralen Wechselrichtern erfordert oftmals eine Modifizierung eines vorhandenen Datenübertragungssystems für eine Leuchtenzustandsmeldung, da die Datenübertragungssysteme meistens für eine DC-Versorgungsspannung ausgelegt sind.

Der Erfindung liegt die Aufgabe zugrunde, eine Notleuchte mit konventionellen Vorschaltgerät anzugeben, die auf einfachere Weise in Notlichtsystemen mit Notstromversorgung aus einer Zentralbatterie eingesetzt werden kann.

Diese Aufgabe wird durch eine Notleuchte mit den im Anspruch 1 angegebenen Merkmalen gelöst. Vorteilhafte Ausgestaltungen sind in den weiteren Ansprüchen angegeben.

Die vorgeschlagene Zuordnung von Kleinleistungswechselrichtern zu Leuchten mit konventionellem Vorschaltgerät hat den Vorteil, daß für diese Leuchten kein zusätzlicher Installationsaufwand erforderlich ist und ein gegebenenfalls vorhandenes Zustandsmeldesystem nicht geändert werden muß.

Die Notleuchte wird anhand eines in der Zeichnung dargestellten Ausführungsbeispiel näher erläutert.

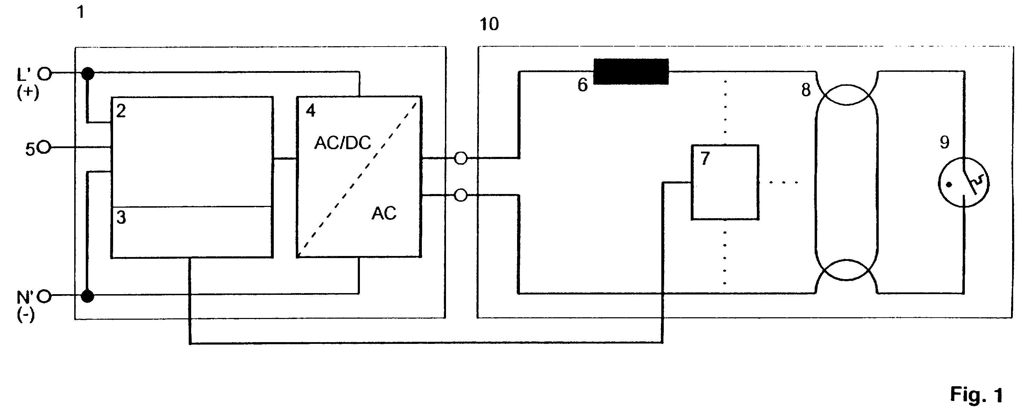

Fig. 1 zeigt eine Leuchte 10 mit üblicher Anordnung einer Leuchtstofflampe 8 mit konventionellem Vorschaltgerät 6 und einem Starter 9. Dieser Anordnung vorgeschaltet ist ein Wechselrichter- und Überwachungsmodul 1, das mit einer Wechselspannung oder einer Gleichspannung betrieben werden kann. Die Anschlüsse für die Versorgungsspannung sind mit L', N' bezeichnet. Das Wechselrichter- und Überwachungsmodul 1 kann vorteilhaft im Gehäuse der Leuchte 10 angeordnet werden. Das Wechselrichter- und Überwachungsmodul 1 enthält einen Kleinleistungswechselrichter 4, der über eine Wandlerelektronik 2 gesteuert wird. Das Modul 1 enthält außerdem eine Überwachungseinrichtung 3, an die ein Sensor 7 zur optischen Überwachung der Leuchtstofflampe angeschlossen ist. Eine Überwachung des störungsfreien Betriebs der Leuchte kann z. B. auch durch eine Strommessung oder Messung der Brennspannung an der Leuchtstofflampe erfolgen. Über einen Datenanschluß 5 kann eine Abfrage des Leuchtenzustands von einer Zentrale aus erfolgen. Eine solche Abfrage und Datenübermittlung kann aber auch mittels Übertragungsverfahren erfolgen, die keine zusätzliche Datenleitung erforderlich machen, da sie die Versorgungsspannungsleitungen benutzen.

Im Notlichtbetrieb kann eine Lichtstromabsenkung wünschenswert sein, um die Batteriestromaufnahme zu reduzieren. Ein solcher Betrieb kann dadurch erreicht werden, daß der Wechselrichter nach Anlegen einer DC-Spannung für eine bestimmte Zeit, z. B. für 10 bis 30 s, mit der Netzfrequenz, z. B. 50 Hz, betrieben wird, damit die Leuchtstofflampe einwandfrei zündet. Danach kann die Frequenz erhöht werden, z. B. auf 60 Hz, wodurch der Blindwiderstand (X_{L} = ω ∗ L) des konventionellen Vorschaltgeräts erhöht und entsprechend die Stromaufnahme reduziert wird. Für größere Leuchtstofflampenleistungen kann es notwendig sein, die Ausgangsspannung des Wechselrichters auf einen höheren Wert zu transformieren, damit die für einen sicheren Betrieb erforderliche Brennspannung auch gegen Ende der Batterieentladung auch noch ausreicht.

Bei Netzbetrieb, d. h. Versorgung mit einer Wechselspannung, kann im Wechselrichter die Spannung über einen Bypaß direkt zur Leuchte durchgeschaltet werden. Es kann aber auch ein durchgehender Wechselrichterbetrieb sowohl bei Netz- als auch bei Batteriebetrieb vorgesehen werden.

## Patentansprüche

1. Nachrüstmodul (1) für eine Leuchte (10) mit wenigstens einem konventionellen Vorschaltgerät und wenigstens einer Leuchtstofflampe (8) für einen Normalbetrieb an einer Wechselspannungsquelle,
**dadurch gekennzeichnet**,
daß das Nachrüstmodul (1) wenigstens einen der Leuchte (10) zuordbaren Kleinleistungswechselrichter (4) zur Einrichtung der Leuchte (10) für einen Notbetrieb an einer Gleichspannungsquelle aufweist, wobei der Kleinleistungswechselrichter (4) zumindest im Fall des Gleichspannungsbetriebes die für den Betrieb der Lampe erforderliche Wechselspannung zur Verfügung stellt.

2. Nachrüstmodul nach Anspruch 1,
**dadurch gekennzeichnet,**
daß das Nachrüstmodul (1) im Leuchtengehäuse der Leuchte (10) anordbar ist.

3. Nachrüstmodul nach Anspruch 1 oder 2,
**dadurch gekennzeichnet,**
daß das Nachrüstmodul (1) eine Wandler-Elektronik (2) zur Steuerung des Kleinleistungswechselrichters (4) aufweist, welche bewirkt, daß der Kleinleistungswechselrichter (4) nach dem Anlegen einer Gleichspannung für eine wählbare Dauer zunächst mit der Frequenz der Normalbetriebs-Wechselspannung arbeitet, damit die Leuchtstofflampe (8) sicher zündet, und danach eine höherfrequente Spannung abgibt, damit die Leuchtstofflampe (8) im Notbetrieb aufgrund des dadurch höheren Blindwiderstandes des Vorschaltgeräts (6) einen reduzierten Strom aufnimmt.

4. Nachrüstmodul nach wenigstens einem der vorangehenden Ansprüche,
**dadurch gekennzeichnet,**
daß das Nachrüstmodul (1) eine Überwachungseinrichtung (3) aufweist, an die ein Sensor (7) zur Überwachung der Leuchtstofflampe (8) angeschlossen ist.

5. Nachrüstmodul nach wenigstens einem der vorangehenden Ansprüche,
**dadurch gekennzeichnet,**
daß das Nachrüstmodul (1) einen Datenanschluß (5) zur Kommunikation mit einer Zentrale aufweist.

## Claims

1. Add-on module (1) for a luminaire (10) with at least one conventional ballast and at least one fluorescent lamp (8) for normal operation by way of an a.c. source, characterised in that the add-on module (1) has at least one low-power inverter (4) which can be associated with the luminaire (10) in order to set up the luminaire (10) for emergency operation by way of a d.c. source, the low-power inverter (4) providing the alternating voltage required for operation of the lamp, at least in the case of d.c. operation.

2. Add-on module according to claim 1, characterised in that the add-on module (1) can be arranged in the housing of the luminaire (10).

3. Add-on module according to claim 1 or claim 2, characterised in that the add-on module (1) has an electronic transformer system (2) for controlling the low-power inverter (4), ensuring that, once a direct voltage has been applied, the low-power inverter (4) first operates for a selectable period of time at the frequency for normal operation with an alternating voltage so that the fluorescent lamp (8) ignites safely, and then delivers a higher-frequency voltage so that the fluorescent lamp (8) consumes a reduced current during emergency operation as a result of the higher reactance of the ballast (6).

4. Add-on module according to at least one of the preceding claims, characterised in that the add-on module (1) has a monitoring device (3) to which a sensor (7) for monitoring the fluorescent lamp (8) is connected.

5. Add-on module according to at least one of the preceding claims, characterised in that the add-on module (1) has a data communication line (5) for communication with a control centre.

## Revendications

1. Module d'équipement ultérieur (1) pour une unité d'éclairage (10) comportant au moins un ballast classique et au moins une lampe fluorescente (8) pour un fonctionnement normal avec raccordement à une source de tension alternative, caractérisé en ce
que le module d'équipement ultérieur (1) comporte au moins un onduleur de faible puissance (4) pouvant être associé à l'unité d'éclairage (10), pour l'utilisation de l'unité d'éclairage (10) pour un fonctionnement de secours avec raccordement à une source de tension continue, l'onduleur de faible puissance (4) délivrant, au moins dans le cas du fonctionnement avec une tension continue, la tension alternative nécessaire pour faire fonctionner la lampe.

2. Module d'équipement ultérieur selon la revendication 1, caractérisé en ce
que le module d'équipement ultérieur (1) peut être monté dans le boîtier de l'unité d'éclairage (10).

3. Module d'équipement ultérieur selon la revendication 1 ou 2, caractérisé en ce
que le module d'équipement ultérieur (1) comporte un système électronique de convertisseur (2) prévu pour la commande de l'onduleur de faible puissance (4) et qui agit de telle sorte qu'après l'application d'une tension continue pendant une durée pouvant être sélectionnée, l'onduleur de faible puissance (4) travaille tout d'abord à la fréquence de la tension alternative de fonctionnement normal, de sorte que la lampe fluorescente (8) s'allume de façon sûre, puis délivre une tension à une fréquence plus élevée afin que la lampe fluorescente (8) reçoive, dans le fonctionnement de secours, un courant réduit, en raison de l'impédance réactive, qui de ce fait est accrue, du ballast (6).

4. Module d'équipement ultérieur selon au moins l'une des revendications précédentes, caractérisé en ce
que le module d'équipement ultérieur (1) comporte un dispositif de contrôle (3), auquel est raccordé un capteur (16) servant à contrôler la lampe fluorescente (8).

5. Module d'équipement ultérieur selon au moins l'une des revendications précédentes, caractérisé en ce
que le module d'équipement ultérieur (1) possède une borne de transmission de données (5) pour la communication avec un central.
